# EUROPEAN PATENT SPECIFICATION

(11) **EP 3 171 576 B1**
(45) Date of publication and mention of the grant of the patent: **14.11.2018**
(21) Application number: 14881531.9
(22) Date of filing: 18.11.2014
(51) Int. Cl.: H04L 29/12, H04L 29/08

(54) **METHOD AND DEVICE FOR TRANSLATION BETWEEN IPV4 AND IPV6**
VERFAHREN UND VORRICHTUNG ZUR ÜBERSETZUNG ZWISCHEN IPV4 UND IPV6
PROCÉDÉ ET DISPOSITIF POUR LA TRADUCTION ENTRE PROTOCOLES IPV4 ET IPV6

(30) Priority: 22.08.2014 CN 201410419646
(43) Date of publication of application: 24.05.2017
(73) Proprietor: Sanechips Technology Co., Ltd., Shenzhen, Guangdong 518055 (CN)
(72) Inventor: SHI, Sheng, Shenzhen Guangdong 518085 (CN); SUN, Quan, Shenzhen Guangdong 518085 (CN); YAN, Junhua, Shenzhen Guangdong 518085 (CN)
(74) Representative: Gevers Patents
(86) International application number: PCT/CN2014/091430
(87) International publication number: WO 2015/117454

(56) References cited:
- CN-A- 101 136 910
- CN-A- 101 227 373
- CN-A- 102 104 863
- US-B2- 8 526 467
- HUAN: 'DUAL-STACK HOSTS USING BUMP IN THE HOST' INTERNET ENGINEERING TASK FORCE (IETF) 29 February 2012, page 6, XP015081446

## Description

### TECHNICAL FIELD

The disclosure relates to a technology for the transition from IPv4 to IPv6, and in particular, to a method and a device for the translation between IPv4 and IPv6.

### BACKGROUND

With the development of services and network scales of mobile Internets and the Internet of things, IPv4 addresses which are used widely have become a scare resource. To deal with the shortage of IPv4 addresses, the Internet Engineering Task Force (IETF) has proposed an IPv6 addressing mode.

IPv6, which is a new generation of network protocol, adopts a 128-bit address format, providing a tremendously huge address space to completely solve the problem of the shortage of IPv4 addresses. After more than ten years of research, experience and industrial promotion, IPv6 has currently come into a stage of commercial deployment.

Technologies for the transition from IPv4 to IPv6 are mainly industrially classified into three types: dual stack, tunnel and translation.

### 1. IPv4/IPv6 dual stack technology

A dual-stack node uses an IPv4 protocol stack when communicating with an IPv4 node and uses an IPv6 protocol stack when communicating with an IPv6 node.

### 2. Tunnel technology

A technology is provided which realizes the communication connection between two IPv6 sites through an IPv4 network and the communication connection between two IPv4 sites through an IPv6 network.

### 3. Technology for translation between IPv4 and IPv6

A technology is provided for the mutual access of an IPv4 network and an IPv6 network.

China mobile advocates the ideal of migrating IP traffic to IPv6 and proposes an innovative IPv6 transition technology (PNAT, Prefix based NAT) which employs a host-based translation mechanism of Bump in Host (BIH) which realizes the migration of service traffic to IPv6, PNAT/BIH supports the transparent running of IPv4-supporting applications on an IPv6 network and is capable of realizing the free communication between an IPv4 network and an IPv6 network.

The BIH technology proposed by China mobile belongs to an IPv4-IPv6 translation technology included in IPv6 transition technologies. The BIH technology whose prototype system has been developed and for which technical standards are formulated is currently filed in RFC6535.

But this technology has certain shortcomings in specific implementation. Each packet has to go through both an IPv4 procedure and an IPv6 procedure. Especially for systems such as linux system, an IPv4 procedure and an IPv6 procedure both include a great number of HOOK functions. It is revealed by the test of the realization of BIH in a linux system with the source codes issued by China mobile that the processing of a packet consumes much time, the performance of BIH is poor and user experience is deteriorated.

### SUMMARY

To address the technical problems existing in the conventional art, embodiments of the disclosure are intended to provide a method and a device for the translation between IPv4 and IPv6.

To achieve the purposes above, the solutions of the disclosure are as follows.

The invention is defined by the subject matter of the independent claims. Advantageous enhancements are subject to the dependent claims.

### BRIEF DESCRIPTION OF THE DRAWINGS

Fig. 1 is a schematic diagram illustrating a network architecture for the translation between an IPv4 network and an IPv6 network;
Fig. 2 is a schematic diagram illustrating a network architecture for the translation between IPv4 and IPv6 realized in an embodiment of the disclosure;
Fig. 3 is a flowchart illustrating a method for the translation between IPv4 and IPv6 realized in an embodiment of the disclosure;
Fig. 4 is a schematic diagram illustrating the transmission of a packet from IPv4 to IPv6 during a link establishment process provided in an embodiment of the disclosure;
Fig. 5 is a schematic diagram illustrating the transmission of a packet from IPv6 to IPv4 during a link establishment process provided in an embodiment of the disclosure;
Fig. 6 is a schematic diagram illustrating the transmission of a packet from IPv4 to IPv6 after the establishment of a link provided in an embodiment of the disclosure;
Fig. 7 is a schematic diagram illustrating the transmission of a packet from IPv4 to IPv6 after the establishment of a link provided in an embodiment of the disclosure; and
Fig. 8 is a schematic diagram illustrating the structure of a device for the translation between IPv4 and IPv6 realized in an embodiment of the disclosure.

### DETAILED DESCRIPTION

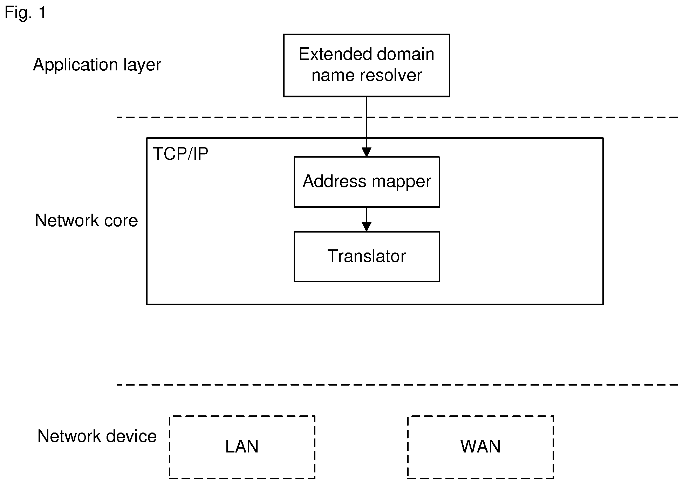

In the BIH technology, the translation between an IPv4 network and an IPv6 network is realized by an application layer and a network core. As shown in Fig. 1, the application layer includes an extended domain name resolver, and the network core includes an address mapper and a translator. In case of a DNS request of an Intranet terminal, if the extended domain name resolver fails to request an A-class Domain Name Service (DNS) (to request for an IPv4 address), then the extended domain name resolver constructs an AAAA-class request (to request for an IPv6 address) and sends the AAAA-class request to a DNS server. When an IPv6 address is obtained, the extended domain name resolver calls a core interface, applies to the address mapper for a virtual IPv4 address and returns the virtual IPv4 address to the intranet terminal. At the same time, the address mapper records the mapping relationship between the IPv6 address and the virtual IPv4 address. For a packet for which a link is established between the intranet terminal and the server (TCP three-way handshake, the first mutual interaction of UDP), if a match with an IP address mapping table is succeeded, then the packet enters the translator to be subject to an IPv4->IPv6 translation or an IPv6->IPv4 translation.

In embodiments of the disclosure, a BIH link tracker and a quick translator are set in a network core. When a link is established between an IPv4 client and an IPv6 server, a packet sent from the IPv4 client to the IPv6 server is translated by a standard translator and then the translated packet is sent to the IPv6 server. The BIH link tracker extracts information on the link of the IPv4 client and the IPv6 server and information on the translation of the IPv4 client and the IPv6 server from the packet for interaction between the IPv4 client and the IPv6 server. When the link between the IPv4 client and the IPv6 server is established, during a process of sending the packet, a packet is sent to the quick translator, and the quick translator translates the packet according to the information on the translation corresponding to the information on the link recorded by the BIH link tracker and then sends the translated packet.

The disclosure is described below in detail with reference to specific embodiments in conjunction with accompanying drawings.

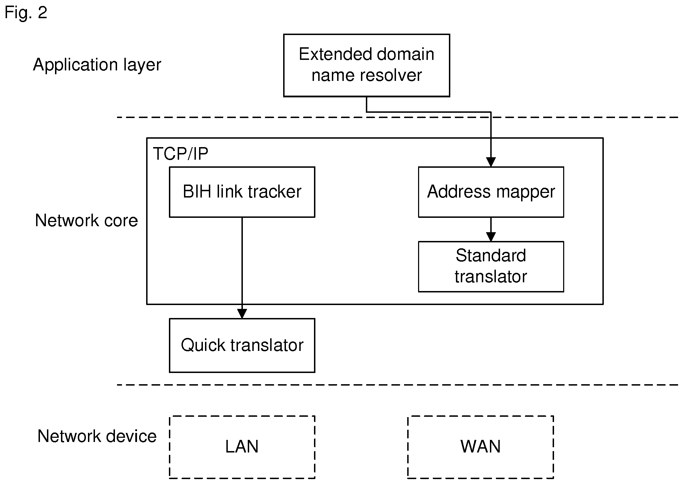

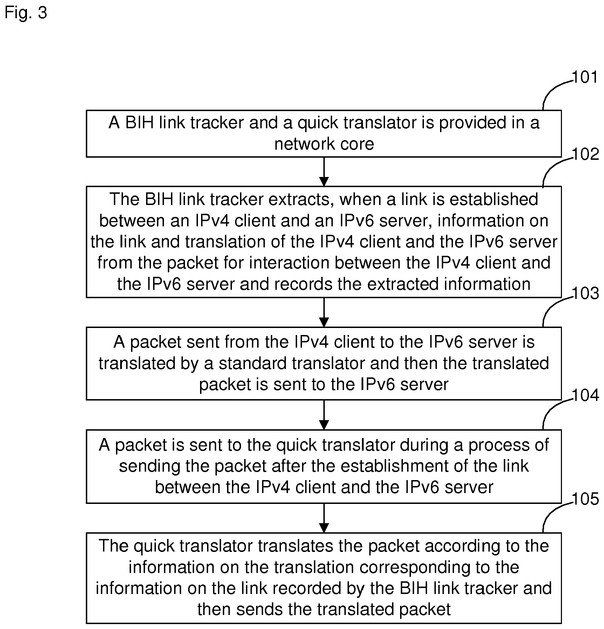

In an embodiment of the disclosure, a method for the translation between IPv4 and IPv6 is realized which. As shown in Fig. 2 and Fig. 3, the method mainly includes the following steps.

In step 101, a BIH link tracker and a quick translator are provided in a network core.

In step 102, the BIH link tracker extracts, when a link is established between an IPv4 client and an IPv6 server, information on the link and translation of the IPv4 client and the IPv6 server from the packet for interaction between the IPv4 client and the IPv6 server and records the extracted information.

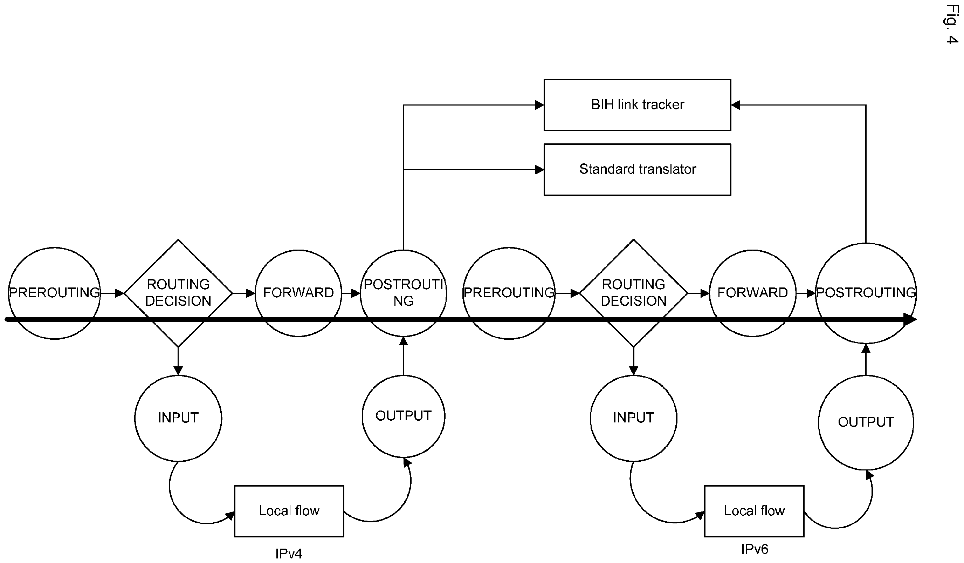

Specifically, when the IPv4 client initiates the establishment of a link to the IPv6 server, as shown in Fig. 4, a translation device receives a packet sent from the IPv4 client. Then the translation device sends the packet to the BIH link tracker when carrying out POSTROUTING for the packet, and the BIH link tracker extracts, from the packet, information on the link of the IPv4 client and information on forward and backward translation of the IPv4 client and records the extracted information.

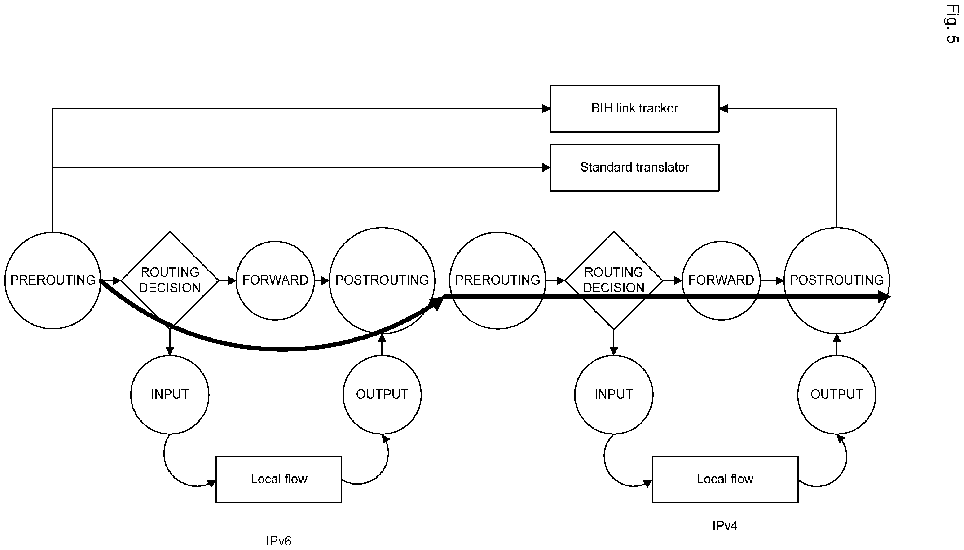

When the IPv6 server returns a response to the establishment of the link to the IPv4 client, as shown in Fig. 5, the translation device receives a packet sent from the IPv6 server. The translation device sends the packet to the BIH link tracker when carrying out PREROUTING for the packet, and the BIH link tracker extracts, from the packet, the information on the link of the IPv6 server and the information on the forward and backward translation and records the extracted information.

The extraction refers to an extraction from fields of a packet head. The information on the forward and the backward translation include: a source IP address, a target IP address, a source MAC address, a target MAC address, a port of a source network device, a port of a target network device and the like.

In step 103, a packet sent from the IPv4 client to the IPv6 server is translated by a standard translator and then the translated packet is sent to the IPv6 server.

Specifically, the translation device sends the packet sent from the IPv4 client to the IPv6 server to the standard translator. The standard translator translates, according to an IP address mapping table sent from an address mapper, the packet from an IPv4 type to an IPv6 type and then sends the translated packet to the IPv6 server.

In step 104, after the establishment of the link between the IPv4 client and the IPv6 server, during a process of sending the packet, a packet is sent to the quick translator.

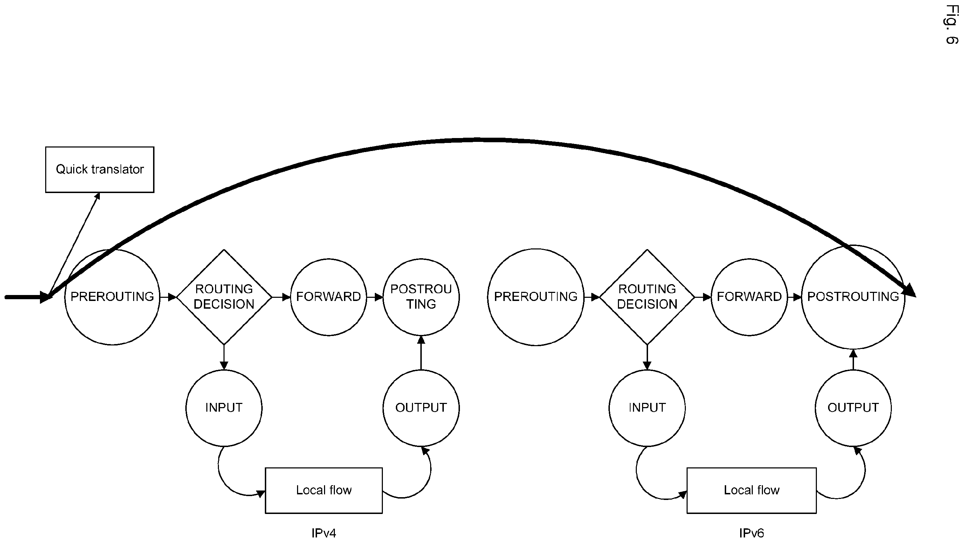

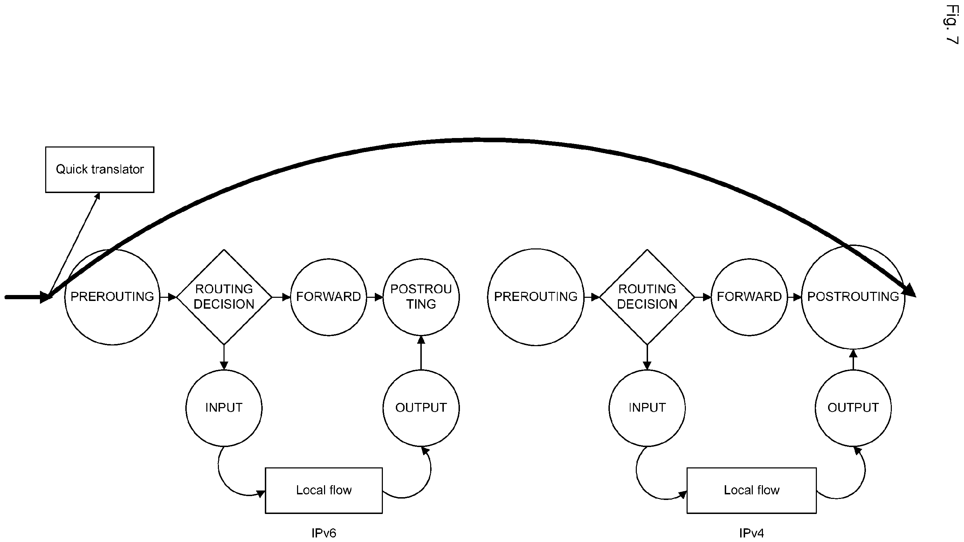

Specifically, after a link is established between an IPv4 network and an IPv6 network, when the IPv4 client initiates the transmission of data to the IPv6 server, as shown in Fig. 6, the translation device sends a packet to the quick translator before carrying out PREROUTING for the packet; and when the IPv6 initiates the transmission of data to the IPv4 client, as shown in Fig. 7, the translation device sends the packet to the quick translator before carrying out PREROUTING for the packet.

In step 105, the quick translator translates the packet according to the information on the translation corresponding to the information on the link recorded by the BIH link tracker and then sends the translated packet.

Specifically, the quick translator extracts the information on the link of the IPv4 client from the packet, matches the information on the link with the information on the link recorded by the BIH link tracker. When the matching is succeeded, the quick translator translates the packet from an IPv4 type to an IPv6 type according to the information on the forward and backward translation corresponding to the matched information on the link and then sends the translated packet to the IPv6 server.

Alternatively, the quick translator extracts the information on the link of the IPv6 server from the packet, matches the information on the link with the information on the link recorded by the BIH link tracker. When the matching is succeeded, the quick translator translates the packet from an IPv6 type to an IPv4 type according to the information on the forward and backward translation corresponding to the matched information on the link and then sends the translated packet to the IPv4 client.

As shown in Fig. 6, after finding, from the information on the link recorded by the BIH link tracker, link information matched with the information on the link included in the packet, the BIH link tracker translates the packet from an IPv4 type to an IPv6 type directly according to the information on the forward and backward translation corresponding to the matched information on the link and then sends the translated packet to the IPv6 server.

As shown in Fig. 7, after finding, from the information on the link recorded by the BIH link tracker, link information matched with the information on the link included in the packet, the BIH link tracker translates the packet from an IPv6 type to an IPv4 type according to the information on the forward and backward translation corresponding to the matched information on the link and then sends the translated packet to the IPv4 client.

It can be seen from Fig. 6 and Fig. 7 that a packet can be directly sent to an opposite terminal by completely bypassing the PREROUTING, the ROUTING DECISION, the FORWARD and the POSTROUTING that need to be carried out by the translation device. As such, a great amount of processing time is saved and transmission efficiency can be improved.

In the method, the following steps are included prior to step 101. After an A-class DNS request for a domain name is failed, an extended domain name resolver constructs an AAAA-class DNS request for a domain name. The extended domain name resolver calls a core interface after obtaining an IPv6 address, and applies to the address mapper for a virtual IPv4 address and returns the virtual IPv4 address to the IPv4 client. The address mapper records the mapping relationship between the IPv6 address and the virtual IPv4 address in an IP address mapping table, and sends the IP address mapping table to the standard translator.

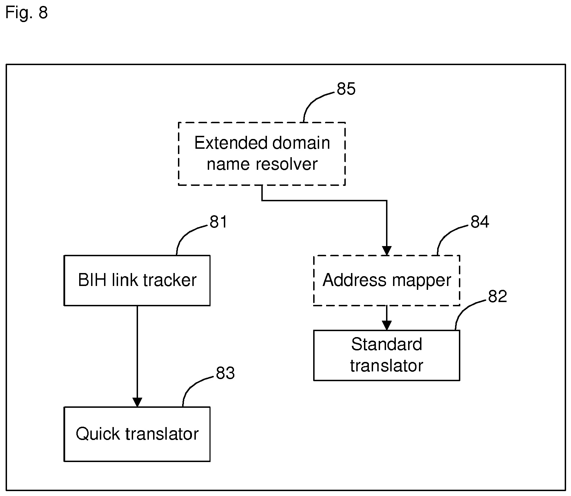

To realize the foregoing method, in an embodiment of the disclosure, a device for the translation between IPv4 and IPv6 is provided. The device is arranged in a translation device such as a router or an exchanger. As shown in Fig. 8, the device includes a BIH link tracker 81, a standard translator 82 and a quick translator 83.

The BIH link tracker 81 is arranged to extract, when a link is established between an IPv4 client and an IPv6 server, information on the link and translation of the IPv4 client and the IPv6 server from the packet for interaction between the IPv4 client and the IPv6 server, and record the extracted information.

The standard translator 82 is arranged to translate a packet sent from the IPv4 client to the IPv6 server, and send the translated packet to the IPv6 server.

The quick translator 83 is arranged to translate, during a process of sending the packet after the establishment of the link between the IPv4 client and the IPv6 server, a packet according to the information on the translation corresponding to the information on the link recorded by the BIH link tracker and then send the translated packet.

When the IPv4 client initiates the establishment of a link to the IPv6 server, the BIH link tracker 81 is specifically arranged to, when carrying out POSTROUTING for the packet sent from the IPv4 client, extract, from the packet sent from the IPv4 client, information on the link of the IPv4 client and information on forward and backward translation of the IPv4 client, and record the extracted information.

When the IPv6 server serving as a client returns a response to the establishment of the link to the IPv4 client, the BIH link tracker 81 is specifically arranged to, when carrying out PREROUTING for a packet sent from the IPv6 server, extract, from the packet sent from the IPv6 server, information on the link of the IPv6 server and the information on the forward and backward translation of the IPv6 server, and record the extracted information.

The information on the forward and the backward translation include: a source IP address, a target IP address, a source MAC address, a target MAC address, a port of a source network device, a port of a target network device and the like.

The quick translator 83 is specifically arranged to extract the information on the link of the IPv4 client from a packet, and match the information on the link with the information on the link recorded by the BIH link tracker 81. The quick translator 83 is arranged to, when the matching is succeeded, translate the packet from an IPv4 type to an IPv6 type according to the information on the forward and backward translation corresponding to the matched information on the link, and send the translated packet to the IPv6 server. Alternatively, the quick translator 83 is arranged to extract the information on the link of the IPv6 server from the packet, and match the information on the link with the information on the link recorded by the BIH link tracker 81. The quick translator 83 is arranged to, when the matching is succeeded, translate the packet from an IPv6 type to an IPv4 type according to the information on the forward and backward translation corresponding to the matched information on the link, and send the translated packet to the IPv4 client.

The standard translator 82 is specifically arranged to translate, according to an IP address mapping table sent from an address mapper, a packet from an IPv4 type to an IPv6 type, and send the translated packet to the IPv6 server.

Accordingly, the device further includes an address mapper 84 which is arranged to send the IP address mapping table to the standard translator 82.

After a link is established between an IPv4 network and an IPv6 network, the quick translator 83 is specifically arranged to, before carrying out PREROUTING, match the information on the link in a packet with the information on the link recorded by the BIH link tracker 81. The quick translator 83 is arranged to, when the matching is succeeded, translate the packet from an IPv4 type to an IPv6 type directly according to the information on the forward and backward translation corresponding to the matched information on the link, and then send the translated packet.

The device further includes an extended domain name resolver 85. The extended domain name resolver 85 is arranged to call a core interface to apply to the address mapper 84 for a virtual IPv4 address and return the virtual IPv4 address to the IPv4 client.

The address mapper 84 is specifically arranged to record the mapping relationship between the IPv6 address and the virtual IPv4 address in an IP address mapping table, and send the IP address mapping table to the standard translator 82.

The method disclosed herein is exemplarily described below with reference to an embodiment of the method in a specific scenario.

In the embodiment, based on the realization of the method in an MIFI/CPE-type device (using a linux system), the specific scenario is set to be a scenario in which an intranet terminal PC (IPv4 address: 192.168.0.100) accesses an IPv6 server (domain name: www.ipv6.com, IPv6 address: 2011::30) through an MIFI device (IPv4 address of Intranet: 192.168.0.1, IPv6 address of Extranet: 1:1:1:102b::1). In such scenario, the method for the translation between IPv4 and IPv6 mainly includes the following steps.

In step 901, the MIFI device receives an A-class request for the domain name www.ipv6.com from the intranet terminal. Then, in the step, an extended domain name resolver first forwards the A-class request to a DNS server. If the DNS server returns a response 'failed' or fails to return a response, the extended domain name resolver constructs an AAAA-class DNS request and sends the AAAA-class DNS request to the DNS server;

In step 902, after receiving an AAAA-class response, the extended domain name resolver extracts the IPv6 address 2011::30 corresponding to the domain name, and informs an address mapper of the IPv6 address through an interface. The address mapper selects an unused IPv4 address 192.0.0.1 from a virtual IPv4 address pool (192.0.0.1-192.0.255.255), establishes a mapping relationship between the addresses 2011::30 and 192.0.0.1 and synchronously returns the address 192.0.0.1 to the extended domain name resolver. And the extended domain name resolver constructs an A-class DNS response, and returns the A-class DNS response to the intranet terminal.

In step 903, the intranet terminal establishes a TCP link to the virtual address 192.0.0.1, the three packets involved in the TCP three-way handshake are translated through a complete BIH flow. Meanwhile, a BIH link tracker arranged in the MIFI device records the information on the link and the information on the translation.

For a forward packet, that is, a packet sent from an IPv4 client to a linked IPv6 server, is in the procedure POSTROUTING of an IPv4 procedure. The packet first enters the BIH link tracker. In the BIH link tracker, the information on the link of the IPv4 client and information on forward and backward translation of the IPv4 client are extracted but not translated. Then, the packet enters the standard translator. In the standard translator, the packet is translated from an IPv4 packet to an IPv6 packet. Then, the packet enters into an IPv6 processing procedure. In the procedure POSTROUTING of an IPv6 procedure, the packet also first enters the BIH link tracker. In the BIH link tracker, IPv6 link information is extracted, while the packet is synchronously supplemented with the information on the translation, such as a source MAC address, a target MAC address, a port of a source network device and a port of a target network device.

For a backward packet involved in a link establishment process, in the procedure PREROUTING of an IPv6 procedure, the packet first enters the BIH link tracker. In the BIH link tracker, IPv6 link information and the information on the translation are extracted but not translated. Then, the packet enters the standard translator. In the standard translator, the packet is translated from an IPv6 packet to an IPv4 packet. Then, the packet enters into an IPv4 processing procedure. In the procedure POSTROUTING of an IPv4 procedure, the packet also first enters the BIH link tracker. In the BIH link tracker, IPv4 link information is extracted, and meantime, the packet is synchronously supplemented with the information on the translation, such as a source MAC address, a target MAC address, a port of a source network device and a port of a target network device. Then the IPv4 packet is translated to an IPv6 packet, and the IPv6 packet enters into an IPv4 flow and finally sent from the intranet terminal.

In step 904, for a forward IPv4 packet for which a link is established, the forward IPv4 packet enters a quick translator in the MIFI device at a packet receiving port. The quick translator extracts link information for matching, constructs an IPv6 packet directly using the matched information on the forward translation and sends the constructed IPv6 packet from a recorded WAN port.

In step 905, for a backward IPv6 packet for which a link is established, the backward IPv6 packet enters the quick translator in the MIFI device at the packet receiving port. The quick translator extracts link information for matching, constructs an IPv4 packet directly using the matched information on the backward translation and sends the constructed IPv4 packet from a recorded LAN port.

### INDUSTRIAL APPLICABILITY

By recording the information on the link and the information on the translation using an added BIH link tracker, directly translating and sending a subsequent packet using a quick translator if the information on the link of the packet is recorded in the BIH link tracker. As such, the solutions provided herein solve the problem that existing BIH technology is time-consuming in processing and a bit poor in performance.

## Claims

1. A method, carried out by a translation device comprising an extended domain resolver, a Bump In host, BIH, link tracker, a standard translator, a quick translator and an address mapper, for translation between Internet Protocol version 4, IPv4, and Internet Protocol version 6, IPv6, comprising:
constructing, by the extended domain name resolver, an AAAA-class domain name service, DNS, request for a domain name after an A-class DNS request for the domain name failed;
obtaining, by the extended domain name resolver, an IPv6 address by sending the constructed AAAA-class domain name service, DNS, request to a domain name service, DNS, server;
receiving, by the extended domain name resolver, from the address mapper a virtual IPv4 address by calling a core interface after the IPv6 address has been obtained;
returning, by the extended domain name resolver, the received virtual IPv4 address to a IPv4 client, and recording, by the address mapper, a mapping relationship between the IPv6 address and the virtual IPv4 address in an IP address mapping table and sending the IP address mapping table to the standard translator;
when a link is established between the IPv4 client and an IPv6 server, translating, by the standard translator, a packet sent from the IPv4 client to the IPv6 server and sending the translated packet to the IPv6 server (103), and extracting, by the BIH link tracker, information on the link and on the translation from the translated packet for interaction between the IPv4 client and the IPv6 server and recording the extracted information (102); and
sending a further packet to the quick translator during a process of sending the further packet between the IPv4 client and the IPv6 server after the establishment of the link between the IPv4 client and the IPv6 server (104) and before the translation device carries out PREROUTING for said further packet; and
translating, by the quick translator, the further packet according to the information on the translation and on the link recorded by the BIH link tracker and sending the translated packet (105);
wherein translating, by the quick translator, the further packet according to the information on the translation and on the link recorded by the BIH link tracker and sending the translated packet (105) comprises one of:
i) extracting, by the quick translator, the information on the link of the IPv4 client from the further packet and matching the information on the link with the information on the link recorded by the BIH link tracker; and
if the matching is successful, translating, by the quick translator, the further packet from an IPv4 type to an IPv6 type according to the information on the translation corresponding to the matched information on the link and sending the translated packet to the IPv6 server; and
ii) extracting, by the quick translator, the information on the link of the IPv6 server from the further packet and matching the information on the link with the information on the link recorded by the BIH link tracker; and
if the matching is successful, translating, by the quick translator, the further packet from an IPv6 type to an IPv4 type according to the information on the translation corresponding to the matched information on the link and sending the translated packet to the IPv4 client.

2. The method for translation according to claim 1, wherein extracting, by the BIH link tracker, information on the link and translation of the IPv4 client and the IPv6 server from the packet for interaction between the IPv4 client and the IPv6 server and recording the extracted information comprises:
when the IPv4 client initiates the establishment of a link to the IPv6 server, receiving, by the translation device, a packet sent from the IPv4 client; sending, by the translation device, the packet to the BIH link tracker when the translation device carries out POSTROUTING for the packet; and extracting, by the BIH link tracker, information on the link of the IPv4 client and information on forward and backward translation of the IPv4 client from the packet and recording the extracted information; and
when the IPv6 server returns a response to the establishment of the link to the IPv4 client, receiving, by the translation device, a packet sent from the IPv6 server; sending, by the translation device, the packet to the BIH link tracker when the translation device carries out PREROUTING for the packet; and extracting, by the BIH link tracker, the information on the link of the IPv6 server and the information on the forward and backward translation of the IPv6 server from the packet and recording the extracted information.

3. A device for translation between Internet Protocol version 4, IPv4, and Internet Protocol version 6, IPv6, comprising: an extended domain name resolver, a Bump In Host, BIH, link tracker (81), a standard translator (82), an address mapper (84) and a quick translator (83), wherein
the extended domain name resolver is arranged to construct an AAAA-class domain name service, DNS, request for a domain name after an A-class DNS request for the domain name failed, obtain an IPv6 address by sending the constructed AAAA-class domain name service, DNS, request to a domain name service, DNS, server, receive from the address mapper a virtual IPv4 address by calling a core interface after the IPv6 address has been obtained, and return the received virtual IPv4 address to a IPv4 client;
wherein the address mapper (84) is arranged to record a mapping relationship between the IPv6 address and the virtual IPv4 address in an IP address mapping table and send the IP address mapping table to the standard translator (82);
when a link is established between the IPv4 client and an IPv6 server, the standard translator (82) is arranged to translate a packet sent from the IPv4 client to the IPv6 server and send the translated packet to the IPv6 server and the BIH link tracker (81) is arranged to extract information on the link and on the translation from the translated packet for interaction between the IPv4 client and the IPv6 server and record the extracted information; the quick translator (83) is arranged to receive a further packet during a process of sending the further packet between the IPv4 client and the IPv6 server after the establishment of the link between the IPv4 client and the IPv6 server and before the device carries out PREROUTING for said further packet, and to translate the further packet according to the information on the translation and on the link recorded by the BIH link tracker (81) and send the translated packet;
wherein the quick translator being arranged to translate the further packet according to the information on the translation and on the link recorded by the BIH link tracker comprises one of:
i) the quick translator is arranged to extract information on the link of the IPv4 client from the further packet, match the information on the link with the information on the link recorded by the BIH link tracker (81) and, when the matching is successful, translate the further packet from an IPv4 type to an IPv6 type according to the information on the translation corresponding to the matched information on the link and send the translated packet to the IPv6 server; and
ii) the quick translator is arranged to extract information on the link of the IPv6 server from the further packet, match the information on the link with the information on the link recorded by the BIH link tracker (81) and, when the matching is successful, translate the further packet from an IPv6 type to an IPv4 type according to the information on the translation corresponding to the matched information on the link and send the translated packet to the IPv4 client.

4. The device for translation according to claim 3, wherein when the IPv4 client initiates the establishment of the link to the IPv6 server, the BIH link tracker (81) is arranged to, when carrying out POSTROUTING for the packet sent from the IPv4 client, extract, from the packet sent from the IPv4 client, information on the link of the IPv4 client and information on forward and backward translation of the IPv4 client and record the extracted information;
when the IPv6 server returns a response to the establishment of the link to the IPv4 client, the BIH link tracker (81) is arranged to, when carrying out PREROUTING for the packet sent from the IPv6 server, extract, from a packet sent from the IPv6 server, information on the link of the IPv6 server and the information on the forward and backward translation of the IPv6 server and record the extracted information.

5. The device for translation according to claim 3, wherein the standard translator (82) is arranged to translate, according to the IP address mapping table sent from the address mapper (82), the packet from an IPv4 type to an IPv6 type and send the translated packet to the IPv6 server.

## Patentansprüche

1. Verfahren, das von einer Übersetzungsvorrichtung ausgeführt wird, das einen erweiterten Domänen-Resolver, einen BIH-Verbindungsverfolger (Bump-In-Host), einen Standardübersetzer, einen schnellen Übersetzer und einen Adresszuordner für die Übersetzung zwischen Internet Protocol Version 4, IPv4, und Internet Protocol Version 6, IPv6, umfasst, umfassend:
Erstellen einer DNS-Anforderung (Domain Name Service) einer AAAA-Klasse für einen Domänennamen durch den erweiterten Domänennamen-Resolver, nachdem eine A-Klassen-DNS-Anforderung für den Domänennamen fehlgeschlagen ist;
Erhalten einer IPv6-Adresse durch den erweiterten Domänennamen-Resolver durch Senden der erstellten AAAA-Klasse-DNS-Anforderung (Domain Name Service) an einen DNS-Server (Domain Name Service);
Empfangen einer virtuellen IPv4-Adresse durch den erweiterten Domänennamen-Resolver von dem Adresszuordner durch Aufrufen einer Kernschnittstelle, nachdem die IPv6-Adresse erhalten wurde;
Zurückgeben der empfangenen virtuellen IPv4-Adresse an einen IPv4-Client durch den erweiterten Domänennamen-Resolver und Aufzeichnen einer Zuordnungsbeziehung zwischen der IPv6-Adresse und der virtuellen IPv4-Adresse in einer IP-Adresszuordnungstabelle durch den Adresszuordner und Senden der IP-Adresszuordnungstabelle an den Standardübersetzer;
wenn eine Verbindung zwischen dem IPv4-Client und einem IPv6-Server aufgebaut wird, Übersetzen eines vom IPv4-Client an den IPv6-Server gesendeten Pakets durch den Standardübersetzer und Senden des übersetzten Pakets an den IPv6-Server (103), und Extrahieren von Information über die Verbindung und die Übersetzung aus dem übersetzten Paket zur Interaktion zwischen dem IPv4-Client und dem IPv6-Server durch den BIH-Verbindungsverfolger und Aufzeichnen der extrahierten Information (102);
und Senden eines weiteren Pakets an den schnellen Übersetzer während eines Prozesses des Sendens des weiteren Pakets zwischen dem IPv4-Client und dem IPv6-Server nach dem Aufbau der Verbindung zwischen dem IPv4-Client und dem IPv6-Server (104) und bevor die Übersetzungsvorrichtung PREROUTING für das weitere Paket ausführt; und
Übersetzen des weiteren Pakets durch den schnellen Übersetzer gemäß der Information über die Übersetzung und die Verbindung, die durch den BIH-Verbindungsverfolger aufgezeichnet wurde, und Senden des übersetzten Pakets (105);
wobei das Übersetzen des weiteren Pakets gemäß der Information über die Übersetzung und die durch den BIH-Verbindungsverfolger aufgezeichnete Verbindung und das Senden des übersetzten Pakets (105) durch den schnellen Übersetzer eines der Folgenden umfasst:
i) Extrahieren der Information über die Verbindung des IPv4-Clients von dem weiteren Paket durch den schnellen Übersetzer und Abgleich der Information über die Verbindung mit der Information über die Verbindung, die durch den BIH-Verbindungsverfolger aufgezeichnet wurde; und
wenn der Abgleich erfolgreich ist, Übersetzen des weiteren Pakets von einem IPv4-Typ zu einem IPv6-Typ durch den schnellen Übersetzer gemäß der Information über die Übersetzung, die der übereinstimmenden Information über die Verbindung entspricht, und Senden des übersetzten Pakets an den IPv6-Server; und
ii) Extrahieren der Information über die Verbindung des IPv6-Servers von dem weiteren Paket durch den schnellen Übersetzer und Abgleichen der Information über die Verbindung mit der Information über die Verbindung, die durch den BIH-Verbindungsverfolger aufgezeichnet wurde; und
wenn der Abgleich erfolgreich ist, Übersetzen des weiteren Pakets von einem IPv6-Typ zu einem IPv4-Typ durch den schnellen Übersetzer gemäß der Information über die Übersetzung, die der übereinstimmenden Information über die Verbindung entspricht, und Senden des übersetzten Pakets an den IPv4-Client.

2. Verfahren zur Übersetzung nach Anspruch 1, wobei das Extrahieren von Information über die Verbindung und die Übersetzung des IPv4-Clients und des IPv6-Servers aus dem Paket zur Interaktion zwischen dem IPv4-Client und dem IPv6-Server durch den BIH-Verbindungsverfolger und das Aufzeichnen der extrahierten Information umfasst:
wenn der IPv4-Client den Aufbau einer Verbindung zum IPv6-Server initiiert, Empfangen eines vom IPv4-Client gesendeten Pakets durch die Übersetzungsvorrichtung;
Senden des Pakets durch die Übersetzungsvorrichtung an den BIH-Verbindungsverfolger, wenn die Übersetzungsvorrichtung POSTROUTING für das Paket ausführt; und
Extrahieren von Information über die Verbindung des IPv4-Clients und Information über die Vorwärts- und Rückwärtsübersetzung des IPv4-Clients aus dem Paket durch den BIH-Verbindungsverfolger und Aufzeichnen der extrahierten Information; und
wenn der IPv6-Server eine Antwort auf den Aufbau der Verbindung zum IPv4-Client zurückgibt, Empfangen eines von dem IPv6-Server gesendeten Pakets durch die Übersetzungsvorrichtung;
Senden des Pakets durch die Übersetzungsvorrichtung an den BIH-Verbindungsverfolger, wenn die Übersetzungsvorrichtung PREROUTING für das Paket ausführt;
und Extrahieren der Information über die Verbindung des IPv6-Servers und der Information über die Vorwärts- und Rückwärtsübersetzung des IPv6-Servers aus dem Paket durch den BIH-Verbindungsverfolger und Aufzeichnen der extrahierten Information.

3. Eine Vorrichtung zur Übersetzung zwischen Internet Protocol Version 4, IPv4, und Internet Protocol Version 6, IPv6, umfassend: einen erweiterten Domänennamen-Resolver, einen BIH-Verbindungsverfolger (Bump-In-Host) (81), einen Standardübersetzer (82), einen Adresszuordner (84) und einen schnellen Übersetzer (83),
wobei der erweiterte Domänennamen-Resolver angeordnet ist, um eine DNS-Anforderung (Domain Name Service) einer AAAA-Klasse für einen Domänennamen zu erstellen, nachdem eine A-Klasse-DNS-Anforderung für den Domänennamen fehlgeschlagen ist, um eine IPv6-Adresse durch Senden der erstellten DNS-Anforderung (Domain Name Service) einer AAAA-Klasse an einen DNS-Server (Domain Name Service) zu erhalten, um von dem Adresszuordner eine virtuelle IPv4-Adresse durch Aufrufen einer Kernschnittstelle nach Erhalt der IPv6-Adresse zu empfangen und die empfangene virtuelle IPv4-Adresse an einen IPv4-Client zurückzugeben;
wobei der Adresszuordner (84) angeordnet ist, eine Zuordnungsbeziehung zwischen der IPv6-Adresse und der virtuellen IPv4-Adresse in einer IP-Adresszuordnungstabelle aufzuzeichnen und die IP-Adresszuordnungstabelle an den Standardübersetzer (82) zu senden;
wenn eine Verbindung zwischen dem IPv6-Server hergestellt wird, ist der Standardübersetzer (82) angeordnet, um ein von dem IPv4-Client an den IPv6-Server gesendetes Paket zu übersetzen und das übersetzte Paket an den IPv6-Server zu senden und der BIH-Verbindungsverfolger (81) ist angeordnet, um Information über die Verbindung und über die Übersetzung aus dem übersetzten Paket zur Interaktion zwischen dem IPv4-Client und dem IPv6-Server zu extrahieren und die extrahierte Information aufzuzeichnen;
ist der schnelle Übersetzer (83) angeordnet, um während eines Prozesses des Sendens des weiteren Pakets zwischen dem IPv4-Client und dem IPv6-Server ein weiteres Paket zu empfangen, nach dem Aufbau der Verbindung zwischen dem IPv4-Client und dem IPv6-Server und bevor die Vorrichtung PREROUTING für das weitere Paket ausführt, und das weitere Paket gemäß der Information über die Übersetzung und über die Verbindung, die durch den BIH-Verbindungsverfolger (81) aufgezeichnet wurde, zu übersetzen und das übersetzte Paket zu senden;
wobei der schnelle Übersetzer angeordnet ist, um das weitere Paket gemäß der Information über die Übersetzung und über die durch den BIH-Verbindungsverfolger aufgezeichneten Verbindung zu übersetzen, und eines der Folgenden umfasst:
i) der schnelle Übersetzer ist angeordnet, um Information über die Verbindung des IPv4-Clients aus dem weiteren Paket zu extrahieren, die Information über die Verbindung mit der Information über die Verbindung, die von dem BIH-Verbindungsverfolger aufgezeichnet werden, abzugleichen (81) und wenn der Abgleich erfolgreich ist, das weitere Paket von einem IPv4-Typ zu einem IPv6-Typ gemäß der Information über die Übersetzung entsprechend der übereinstimmenden Information über die Verbindung zu übersetzen und das übersetzte Paket an den IPv6-Server zu senden; und
ii) der schnelle Übersetzer ist angeordnet, um Information über die Verbindung des IPv6-Servers aus dem weiteren Paket zu extrahieren, die Information über die Verbindung mit der Information über die Verbindung, die von dem BIH-Verbindungsverfolger aufgezeichnet werden, abzugleichen (81) und wenn der Abgleich erfolgreich ist, das weitere Paket von einem IPv6-Typ in einen IPv4-Typ gemäß der Information über die Übersetzung entsprechend der übereinstimmenden Information über die Verbindung zu übersetzen und das übersetzte Paket an den IPv4-Client zu senden.

4. Übersetzungsvorrichtung nach Anspruch 3, wobei, wenn der IPv4-Client den Aufbau der Verbindung zu dem IPv6-Server initiiert, der BIH-Verbindungsverfolger (81) angeordnet ist, beim Ausführen von POSTROUTING für das vom IPv4-Client gesendete Paket aus dem vom IPv4-Client gesendeten Paket, Information über die Verbindung des IPv4-Clients und Information über die Vorwärts- und Rückwärtsübersetzung des IPv4-Clients zu extrahieren und die extrahierte Information aufzuzeichnen;
wenn der IPv6-Server eine Antwort auf den Aufbau der Verbindung zu dem IPv4-Client zurückgibt, ist der BIH-Verbindungsverfolger (81) angeordnet, um bei Ausführung von PREROUTING für das Paket, das von dem IPv6-Server gesendet wird, aus einem von dem IPv6-Server gesendeten Paket Information über die Verbindung des IPv6-Servers und die Information über die Vorwärts- und Rückwärtsübersetzung des IPv6-Servers zu extrahieren und die extrahierte Information aufzuzeichnen.

5. Übersetzungsvorrichtung nach Anspruch 3, wobei der Standardübersetzer (82) angeordnet ist, um das Paket von einem IPv4-Typ zu einem IPv6-Typ gemäß der IP-Adresszuordnungstabelle, die von dem Adresszuordner (82) gesendet wird, zu übersetzen und das übersetzte Paket an den IPv6-Server zu senden.

## Revendications

1. Procédé, réalisé par un dispositif de traduction comprenant un résolveur de domaine étendu, un suiveur de liaison de mémoire annexe dans hôte, BIH, un traducteur type, un traducteur rapide et un mappeur d'adresses, pour une traduction entre un Protocole Internet version 4, IPv4, et un Protocole Internet version 6, IPv6, comprenant :
la construction, par le résolveur de nom de domaine étendu, d'une demande de service de nom de domaine, DNS, de classe AAAA pour un nom de domaine après qu'une demande DNS de classe A pour le nom de domaine a échoué ;
l'obtention, par le résolveur de nom de domaine étendu, d'une adresse IPv6 en envoyant la demande de service de nom de domaine, DNS, de classe AAAA à un serveur de service de nom de domaine, DNS ;
la réception, par le résolveur de nom de domaine étendu, en provenance du mappeur d'adresses d'une adresse IPv4 virtuelle en appelant une interface centrale après que l'adresse IPv6 a été obtenue ;
le renvoi, par le résolveur de nom de domaine étendu, de l'adresse IPv4 virtuelle reçue à un client IPv4, et l'enregistrement, par le mappeur d'adresses, d'une relation de mappage entre l'adresse IPv6 et l'adresse IPv4 virtuelle dans une table de mappage d'adresses IP et l'envoi de la table de mappage d'adresses IP au traducteur type ;
lorsqu'une liaison est établie entre le client IPv4 et un serveur IPv6, la traduction, par le traducteur type, d'un paquet envoyé du client IPv4 au serveur IPv6 et l'envoi du paquet traduit au serveur IPv6 (103), et l'extraction, par le suiveur de liaison BIH, d'informations sur la liaison et sur la traduction à partir du paquet traduit pour une interaction entre le client IPv4 et le serveur IPv6 et l'enregistrement des informations extraites (102) ; et
l'envoi d'un paquet supplémentaire au traducteur rapide pendant un processus d'envoi du paquet supplémentaire entre le client IPv4 et le serveur IPv6 après l'établissement de la liaison entre le client IPv4 et le serveur IPv6 (104) et avant que le dispositif de traduction réalise un PRÉROUTAGE pour ledit paquet supplémentaire ; et
la traduction, par le traducteur rapide, du paquet supplémentaire selon les informations sur la traduction et sur la liaison enregistrées par le suiveur de liaison BIH et l'envoi du paquet traduit (105) ;
dans lequel la traduction, par le traducteur rapide, du paquet supplémentaire selon les informations sur la traduction et sur la liaison enregistrées par le suiveur de liaison BIH et l'envoi du paquet traduit (105) comprennent l'une parmi :
i) l'extraction, par le traducteur rapide, des informations sur la liaison du client IPv4 à partir du paquet supplémentaire et la mise en concordance des informations sur la liaison avec les informations sur la liaison enregistrées par le suiveur de liaison BIH ; et
si la mise en concordance est réussie, la traduction, par le traducteur rapide, du paquet supplémentaire d'un type IPv4 à un type IPv6 selon les informations sur la traduction correspondant aux informations mises en concordance sur la liaison et l'envoi du paquet traduit au serveur IPv6 ; et
ii) l'extraction, par le traducteur rapide, des informations sur la liaison du serveur IPv6 à partir du paquet supplémentaire et la mise en concordance des informations sur la liaison avec les informations sur la liaison enregistrées par le suiveur de liaison BIH ; et
si la mise en concordance est réussie, la traduction, par le traducteur rapide, du paquet supplémentaire d'un type IPv6 à un type IPv4 selon les informations sur la traduction correspondant aux informations mises en concordance sur la liaison et l'envoi du paquet traduit au client IPv4.

2. Procédé de traduction selon la revendication 1, dans lequel l'extraction, par le suiveur de liaison BIH, d'informations sur la liaison et la traduction du client IPv4 et du serveur IPv6 à partir du paquet pour une interaction entre le client IPv4 et le serveur IPv6 et l'enregistrement des informations extraites comprennent :
lorsque le client IPv4 lance l'établissement d'une liaison avec le serveur IPv6, la réception, par le dispositif de traduction, d'un paquet envoyé depuis le client IPv4 ;
l'envoi, par le dispositif de traduction, du paquet au suiveur de liaison BIH lorsque le dispositif de traduction réalise un POSTROUTAGE pour le paquet ;
et l'extraction, par le suiveur de liaison BIH, d'informations sur la liaison du client IPv4 et d'informations sur une traduction avant et arrière du client IPv4 à partir du paquet et l'enregistrement des informations extraites ; et
lorsque le serveur IPv6 renvoie une réponse à l'établissement de la liaison au client IPv4, la réception, par le dispositif de traduction, d'un paquet envoyé depuis le serveur IPv6 ;
l'envoi, par le dispositif de traduction, du paquet au suiveur de liaison BIH lorsque le dispositif de traduction réalise un PRÉROUTAGE pour le paquet ;
et l'extraction, par le suiveur de liaison BIH, des informations sur la liaison du serveur IPv6 et des informations sur la traduction avant et arrière du serveur IPv6 à partir du paquet et l'enregistrement des informations extraites.

3. Dispositif de traduction entre un Protocole Internet version 4, IPv4, et un Protocole Internet version 6, IPv6, comprenant : un résolveur de nom de domaine étendu, un suiveur de liaison (81) de mémoire annexe dans hôte, BIH, un traducteur type (82), un mappeur d'adresses (84) et un traducteur rapide (83), dans lequel
le résolveur de nom de domaine étendu est agencé pour construire une demande de service de nom de domaine, DNS, de classe AAAA pour un nom de domaine après qu'une demande DNS de classe A pour le nom de domaine a échoué, obtenir une adresse IPv6 en envoyant la demande de service de nom de domaine, DNS, de classe AAAA construite à un serveur de service de nom de domaine, DNS, recevoir en provenance du mappeur d'adresses une adresse IPv4 virtuelle en appelant une interface centrale après que l'adresse IPv6 a été obtenue, et renvoyer l'adresse IPv4 virtuelle reçue à un client IPv4 ;
dans lequel le mappeur d'adresses (84) est agencé pour enregistrer une relation de mappage entre l'adresse IPv6 et l'adresse IPv4 virtuelle dans une table de mappage d'adresses IP et envoyer la table de mappage d'adresses IP au traducteur type (82) ;
lorsqu'une liaison est établie entre le client IPv4 et un serveur IPv6, le traducteur type (82) est agencé pour traduire un paquet envoyé du client IPv4 au serveur IPv6 et envoyer le paquet traduit au serveur IPv6, et le suiveur de liaison BIH (81) est agencé pour extraire des informations sur la liaison et sur la traduction à partir du paquet traduit pour une interaction entre le client IPv4 et le serveur IPv6 et enregistrer les informations extraites ;
le traducteur rapide (83) est agencé pour recevoir un paquet supplémentaire pendant un processus d'envoi du paquet supplémentaire entre le client IPv4 et le serveur IPv6 après l'établissement de la liaison entre le client IPv4 et le serveur IPv6 et avant que le dispositif réalise un PRÉROUTAGE pour ledit paquet supplémentaire, et pour traduire le paquet supplémentaire selon les informations sur la traduction et sur la liaison enregistrées par le suiveur de liaison BIH (81) et envoyer le paquet traduit ;
dans lequel le traducteur rapide agencé pour traduire le paquet supplémentaire selon les informations sur la traduction et sur la liaison enregistrées par le suiveur de liaison BIH comprend l'un parmi :
i) le traducteur rapide est agencé pour extraire des informations sur la liaison du client IPv4 à partir du paquet supplémentaire, mettre en concordance les informations sur la liaison avec les informations sur la liaison enregistrées par le suiveur de liaison BIH (81) et, lorsque la mise en concordance est réussie, traduire le paquet supplémentaire d'un type IPv4 à un type IPv6 selon les informations sur la traduction correspondant aux informations mises en concordance sur la liaison et envoyer le paquet traduit au serveur IPv6 ; et
ii) le traducteur rapide est agencé pour extraire des informations sur la liaison du serveur IPv6 à partir du paquet supplémentaire, mettre en concordance les informations sur la liaison avec les informations sur la liaison enregistrées par le suiveur de liaison BIH (81) et, lorsque la mise en concordance est réussie, traduire le paquet supplémentaire d'un type IPv6 à un type IPv4 selon les informations sur la traduction correspondant aux informations mises en concordance sur la liaison et envoyer le paquet traduit au client IPv4.

4. Dispositif de traduction selon la revendication 3, dans lequel lorsque le client IPv4 lance l'établissement de la liaison avec le serveur IPv6, le suiveur de liaison BIH (81) est agencé, lors de la réalisation d'un POSTROUTAGE pour le paquet envoyé depuis le client IPv4, pour extraire, à partir du paquet envoyé depuis le client IPv4, des informations sur la liaison du client IPv4 et des informations sur une traduction avant et arrière du client IPv4 et enregistrer les informations extraites ;
lorsque le serveur IPv6 renvoie une réponse à l'établissement de la liaison au client IPv4, le suiveur de liaison BIH (81) est agencé, lors de la réalisation d'un PRÉROUTAGE pour le paquet envoyé depuis le serveur IPv6, pour extraire, à partir d'un paquet envoyé depuis le serveur IPv6, des informations sur la liaison du serveur IPv6 et les informations sur la traduction avant et arrière du serveur IPv6 et enregistrer les informations extraites.

5. Dispositif de traduction selon la revendication 3, dans lequel
le traducteur type (82) est agencé pour traduire, selon la table de mappage d'adresses IP envoyée depuis le mappeur d'adresses (82), le paquet d'un type IPv4 à un type IPv6 et envoyer le paquet traduit au serveur IPv6.
